# EUROPEAN PATENT SPECIFICATION

(11) **EP 4 606 438 B1**
(45) Date of publication and mention of the grant of the patent: **21.10.2026**
(21) Application number: 24161934.5
(22) Date of filing: 07.03.2024
(51) Int. Cl.: A63B 39/06, A63B 43/00, A63H 3/00

(54) **BOUNCING TOY WITH PLUSH EXTERIOR**
PRALLENDES SPIELZEUG MIT PLÜSCHHÜLLE
JOUET REBONDISSANT AVEC EXTÉRIEUR EN PELUCHE

(30) Priority: 21.02.2024 US 202418583565
(43) Date of publication of application: 27.08.2025
(60) Divisional application: 26180742.4 / 4 772 255
(73) Proprietor: TY, Inc., Westmont, IL 60559 (US)
(72) Inventor: WARNER, Ty, Westmont, IL 60559 (US)
(74) Representative: Bardehle Pagenberg Partnerschaft mbB Patentanwälte Rechtsanwälte

(56) References cited:
- CN-U- 211 097 505
- KR-B1- 101 976 654
- US-A- 6 126 510
- US-S- D 323 865
- I_STUDIO_ REDSTAR: "Ready to ship pet toys bouncing ball stuffed plush chewing toys", 6 April 2022 (2022-04-06), XP093411380, Retrieved from the Internet <URL:https://www.youtube.com/watch?v=SgueVfyE4Z0> [retrieved on 20260629]

## Description

### FIELD

The present invention relates generally to plush toys. More particularly, the present invention relates to a bouncing toy with a plush exterior.

### BACKGROUND

Conventional bouncing balls typically have a smooth and hard exterior. For example, the "Super Ball", disclosed in U.S. Patent No. 3,241,834, is an extremely resilient, rigid ball or sphere. The Super Ball is capable of a high bounce due to the highly compressed polybutadiene rubber. While these balls bounce well, the exterior of the Super Ball is smooth and plain.

Conventional plush toys are also known. An example of a spherical, plush toy is the Ty Beanie Ballz^{®} line of plush toys, sometimes called Ty Puffies^{®}. These plush balls have a soft, fluffy exterior and generally include a fun character face. Beanie Ballz^{®} are tossable and soft, but they do not meaningfully bounce because they are filled with stuffing material similar to a stuffed animal. Other plush toys exist, but none of these plush toys sufficiently bounce to provide the fun and enjoyment of conventional bouncing balls. US6126510 discloses a bouncing toy with a resilient outer core surrounded by an outer layer of varying thicknesses, chosen such that the bounce response is irregular and unpredictable. CN211097505 discloses a plush toy comprising a pressure ball. KR101976654 discloses an inflatable beach ball with a fluffy outer skin.

In view of the above, there is a continuing, ongoing need for improved plush toys.

In view of the above, there is a continuing, ongoing need for improved plush toys.

### BRIEF DESCRIPTION OF THE DRAWINGS

FIG. 1 illustrates a bouncing plush toy according to an embodiment;
FIG. 2 illustrates various character or animal designs that can be included an a bouncing plush toy according to an embodiment;
FIGs. 3A and 3B illustrate a method for forming the bouncing plush toy according to an exemplary embodiment;
FIG. 4 illustrates a sewing pattern for forming a bouncing plush toy according to an embodiment;
FIG. 5 illustrates a method of manufacture for the bouncing ball toy according to an exemplary embodiment.

### DETAILED DESCRIPTION

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments. Rather, the invention is limited by the appended claims.

Embodiments disclosed herein can include a bouncing ball toy with a plush fabric exterior. The plush fabric exterior is formed over an internal bouncing ball structure such that the plush fabric exterior does not significantly impact or dampen the ability of the internal bouncing ball structure to bounce when impacting a hard object. The interior ball structure comprises highly resilient materials and provides significant bounce and liveliness after impacting a hard object. Indeed, the interior ball structure can provide ample bounce and liveliness even when surrounded by the plush fabric exterior such that the bouncing ball toy with the plush fabric exterior still provides fun and enjoyment in bouncing the ball.

In some embodiments, the plush fabric exterior can include fabric or other fibers that provide a fur-like texture on the bouncing ball toy. The plush fabric comprises a pile to give the plush fabric a raised or fuzzy surface. The pile may give the plush fabric the fur-like texture. The pile length is 3-50 mm in length. In one embodiment, the pile length can be 5 mm in length because longer pile lengths may affect bounce. In some embodiments, the pile length of the plush fabric exterior can depend on the character or animal depicted by bouncing ball toy. The plush fabric exterior includes sewn on facial features, such as eyes, muzzles, and mouths, and includes sewn on extremities, such as ears, whiskers, legs, or arms. In an embodiment that includes facial features and extremities, the facial features are formed using stiff fabrics, such as cotton, polyester, or nylon thread, to generate a hard surface after weaving so that the facial features do not significantly impact bouncing. The extremities comprise soft and pliable fabric that does not affect bouncing of the bouncing ball toy.

Embodiments of the bouncing ball toy disclosed herein can provide a multi-functional experience for a child or other user. The bouncing ball toy can provide a soft, plush toy experience on the surface while also bouncing like a bouncy ball during play, thereby adding extra fun and experience for a user of the bouncing ball toy. In some embodiments, the bouncing ball toy can include animal, cartoon, or other faces an the balls to make the toy pleasing in appearance and appeal to children. Moreover, the plush fabric may include the pile described above to generate a three-dimensional fiber having the appearance of fur to make the toy cuddly and fun to hold without bouncing.

The bouncing ball toy with the plush fabric exterior disclosed herein is spherical in shape, the bouncing ball toy is small enough to be grippable by a child and is 5-10 cm in diameter.

The plush fabric exterior is attached to the interior ball structure in a manner that does not significantly affect bounce or liveliness. Even when covered with the plush fabric, the bouncing ball toy with the plush exterior can bounce off a hard surface 55-70% of a height dropped (e.g., dropping the ball from a height of 3 feet can result in a bounce of two feet). The impressive bouncing performance of the bouncing ball toy is generated by the combination of an internal ball structure comprising a highly resilient material, such as polyurethane, and careful attachment of the plush fabric exterior to the internal ball structure to ensure a tight fit without wrinkles or air bubbles between an exterior surface of the internal ball structure and the plush fabric exterior.

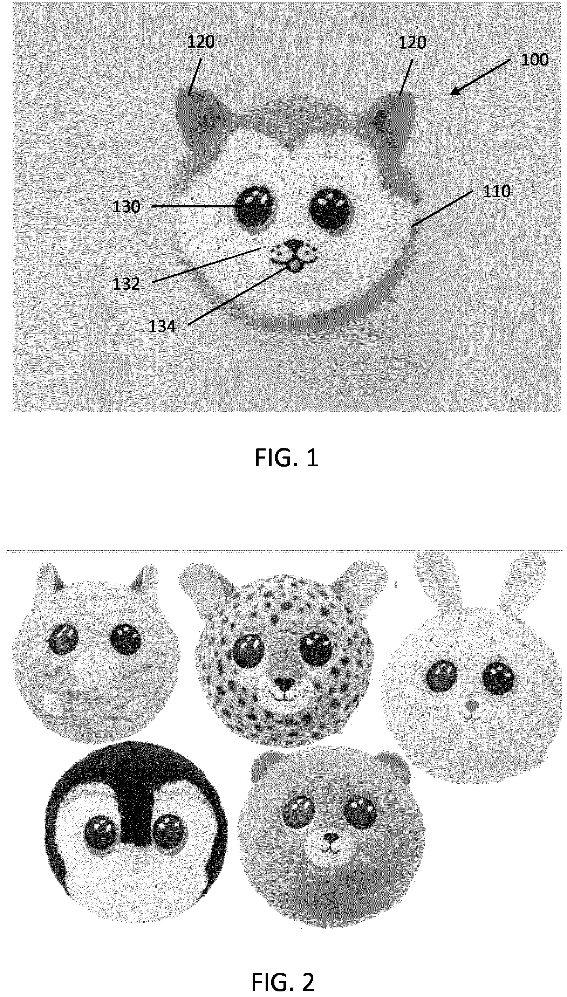

FIG. 1 illustrates a bouncing plush toy with a plush fabric exterior 100 according to an embodiment. As shown, the bouncing plush toy 100 includes a plush fabric exterior 110, extremities 120, and facial features 130-134 formed on the plush fabric exterior. According to an exemplary embodiment, the bouncing ball toy 100 can resemble an animal or other cartoon character. The embodiment illustrated in FIG. 1 depicts a bouncing ball toy 100 having a husky dog character with ear extremities 120 and facial features 130-134, which include eyes 130, a snout 132, and a mouth 134. Other characters or animals can be depicted using different plush fabric colors, different extremities, and different facial features, as shown in FIG. 2. In addition, the various characters and animals can include plush fabric exteriors having different pile lengths.

Referring again to FIG. 1, the bouncing ball toy 100 can be spherical in shape. The plush fabric exterior 110 can include a pile (e.g. 5-40 mm) giving the plush fabric a three-dimensional sense that can emulate fur of the animal character depicted by the extremities 120 and the facial features 130-134.

The extremities 120 may be sewn to the plush fabric exterior 110 at the base of the plush fabric exterior 110 or beneath the pile pf the plush fabric exterior 110. In other words, the extremities may not attach to the fibers forming the pile of the plush fabric exterior 110. The extremities 120 comprise a soft and pliable fabric so as not to impact bouncing of the bouncing ball toy 100, such as causing the bouncing ball to carom unexpectedly or ricochet off the extremities 120. The extremities 120 may be cut separately using a stencil or other guide and sewn using thin, but stiff threads. Again, the thread is chosen so as not to damped or impact bouncing of the bouncing ball toy 100. In some embodiments, the extremities 120 may comprise a plush fabric having a shorter pile length than the plush fabric exterior 100. The extremities may not attach to the plush fabric exterior via glue or other adhesive as these materials may affect consistent bouncing of the bouncing ball toy.

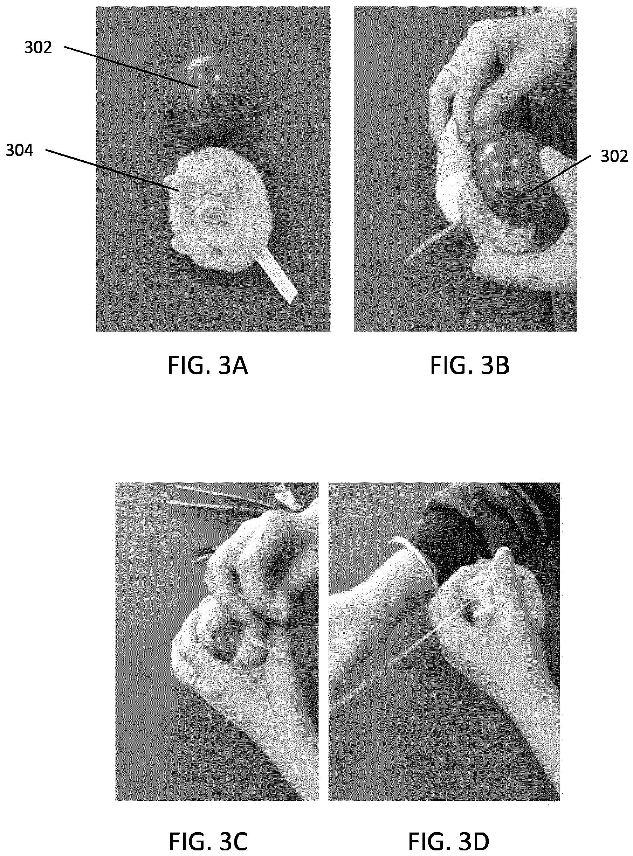

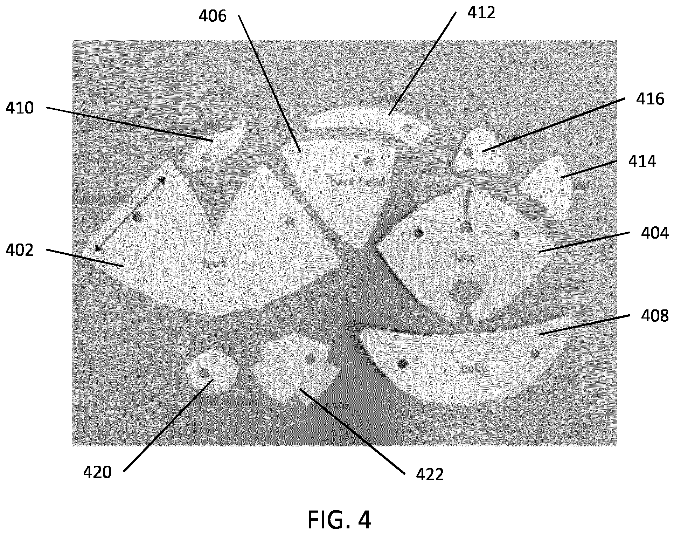

The bouncing ball toy 100 includes an internal ball structure, not seen in FIG. 1 because the plush fabric exterior 100 completely covers the internal ball structure. Referring to FIG. 3A, the internal ball structure 302 can be seen with a plush fabric skin 304 (formed by a sewing profile described later with reference to FIG. 4). The plush fabric skin 304 comprises the plush fabric exterior 110, the extremities 120, and the facial features 130-134 described with reference to FIG. 1. That is, the skin 304 can be fully formed before stuffing the skin 304 with the internal ball structure 302. The skin 304 may be spherical in shape and may have a pocket for accepting the internal ball structure. The closing seam, when open, can provide an opening into the pocket before the closing seam is closed to cover the internal ball structure, and the closing seam may have substantially the same length as the diameter of the internal ball structure. As shown in FIG. 3B, the internal ball structure 302 is inserted, or stuffed, into the plush fabric skin 304 through an unsewn seam 306 in the plush fabric skin 304. The plush fabric skin 304 has a size and shape that corresponds with the diameter of the internal ball structure 302, and the plush fabric skin 304 tightly fits over the internal ball structure. In addition, the seam 306 in the plush fabric skin 304 can be the substantially the same length as the diameter of the internal ball structure 302.

As shown in FIG. 3C, the seam 306 is closed tightly over the internal ball structure, and, as shown in FIG. 3D, the seam is tightly sewn closed using stiff thread and by stretching the plush fabric skin 304 over the internal ball structure 302 to minimize wrinkles in the plush fabric skin 304 that may dampen or substantially hinder the ability of the internal ball structure 302 to provide bouncing enjoyment. To prevent wrinkles, air bubbles, or any other hinderances to tight wrapping of the plush fabric skin 304 over the internal ball structure 302, the plush fabric skin 304 may include relatively few patterns and a relatively long sewing seam. In one embodiment, the seam 306 may be the same or substantially the same length as the diameter of the internal ball structure 302. In addition, a sewing pattern (shown in FIG. 4) must be very accurate on arc length and symmetrical.

In some embodiments, the plush fabric skin 304 may attach to the internal ball structure 302 without glue or other adhesive because glue may dampen bouncing. Moreover, to ensure bouncing, a sewing margin while sewing the seam must be even. In addition, the seam 306 must be sewn very tightly, with stiff thread, and with sufficient force by any sewing workmanship to ensure tight fitting of the plush fabric skin 304 over the internal ball structure 302.

In some embodiments, the internal ball structure 302 may comprise polyurethane to provide a highly resilient structure that bounces off hard objects. In a preferred embodiment, a polyurethane material of the internal ball structure 302 may comprise a chemical composition according to Table 1.

**Table 1**

| Chemical Name | CAS Number | Percentage |
|---|---|---|
| Toluene Diisocyanate (TDI) | 26471-62-5 | 74% |
| Polyether Polyol (PPG) | 90031 1-6 | 23% |
| Tin Octoate | 30110-0 | 1% |
| Silicone Oil | Nil | 1% |
| Color Cream (PM-433) | Nil | 1% |

However, several highly resilient materials are envisioned for the internal ball structure 302, including stiff rubbers or other highly resilient polymers. In some embodiments, the internal ball structure 302 may comprise foam, but the foam internal ball structure 302 may not provide sufficient bouncing response for some applications.

In some embodiments, the plush fabric 110 may comprise XTM fabric. The XTM fabric may include fibers of 5mm pile length and 450 grams/yard. However, any plush fabric is envisioned for the plush fabric 110.

The plush fabric skin 304 can be formed by a sewing pattern 400 shown in FIG. 4. The sewing pattern 400 can include a plurality of sewing pattern sections the result in a spherical skin. The sewing pattern 400 can include plush fabric exterior sections, including a back section 402, a face section 404, a back head section 406, and a belly portion 408. The plush fabric exterior sections 402-408 are sewn together to form the plush fabric exterior 110. Notable the back section 402 includes the closing seam 306 along a side of the back section described above. The sewing pattern 400 shown in FIG. 4 is exemplary, and other sewing patterns are envisioned based on the character or animal depicted by the bouncing ball toy 100.

In addition to the plush fabric exterior sections 402-408, the sewing pattern 400 can include extremity sections, including a tail section 410, a mane section 412, an ear section 414, and a horn section 416. The number and types of extremity sections 410-416 can depend on the character or animal depicted by the bouncing ball toy 100.

Further still, the sewing pattern 400 can include facial feature sections, such as inner muzzle section 420 and muzzle section 422. The muzzle section 422 may cover and overlap with the inner muzzle section 420 so that the muzzle or snout can be slightly raised over the plush fabric exterior 110, giving the appearance and sensation of a small nose or snout. The combination of the inner muzzle section 420 and muzzle section 422 may be sufficiently hard so as not to overly dampen the bouncing of the bouncing ball toy.

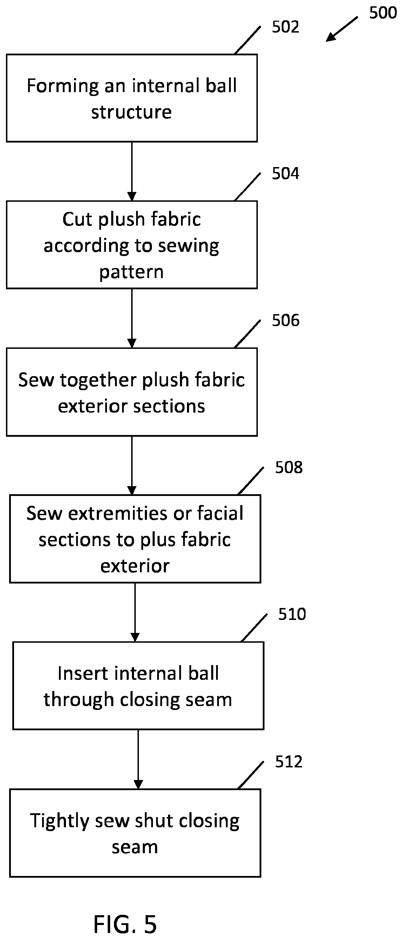

FIG. 5 illustrates a method of manufacturing 500 the bouncing ball toy of the exemplary embodiments described herein. As shown in FIG. 5, the method 500 may include forming the internal ball structure in step 502. In some embodiments, the internal ball structure is pre-formed and purchased or formed using known methods. Additionally, the method 40 may include cutting a plush fabric according to a sewing pattern, such as the sewing pattern illustrated in FIG. 4, in step 504. In step 506, the plush fabric exterior sections may be sewn together to form the plush fabric exterior 110. A stitcher or machine may leave open the closing seam 306 as part of the sewing step 506. The method may further include sewing any extremities or facial features into the plush fabric exterior or any unsewn portions of the plush fabric exterior to form the plush fabric skin 304 in step 508. Subsequently, the internal ball structure 302 is inserted into the plush fabric skin 304 through the closing seam 306 in step 510, and subsequently the closing seam is tightly sewn shut in step 512. The plush toy skin 304 may be stretched over the internal ball structure as the closing seam is sewn shut to ensure no wrinkles when the plush toy skin 304 covers the internal ball structure 302.

The bouncing ball toy with the plush fabric exterior solves the problems over the prior art because the bouncing ball toy with the plush fabric exterior provides both a fun and engaging bouncing ball that includes interesting, soft, and cuddly exterior, thereby providing a multifunctional toy experience.

Although a few embodiments have been described in detail above, other modifications are possible. For example, the steps described above do not require the particular order described or sequential order to achieve desirable results. Other steps may be provided, steps may be eliminated from the described flows, and other components may be added to or removed from the described systems. Other embodiments may be within the scope of the invention.

The invention is defined by the claims.

## Claims

1. A toy (100) comprising:
an internal ball structure (302) comprising a highly resilient material capable of significant bouncing off a hard surface;
a plush fabric skin (304) configured to cover the internal ball structure (302) such that the plush fabric exterior (110) does not significantly impact or dampen the ability of the internal bouncing ball structure (302) to bounce when impacting a surface, wherein the bouncing ball toy (100) with the plush fabric exterior (110) can bounce off a hard surface 55-70% of a height dropped; wherein the highly resilient material comprises polyurethane, stiff rubber or higly resilient polymers;
wherein the plush fabric skin comprises a pile and the pile length is 3-50 mm in length;
wherein the plush fabric skin (304) further comprises:
extremities (120) comprising a soft and pliable fabric sewn on to a plush fabric exterior (110) of the plush fabric skin (304) and
wherein the extremeties are sewn on and not attached to the plush fabric exterior via glue or other adhesive; and
facial features (130, 131, 132, 133, 134) sewn on the plush fabric exterior (110) of the plush fabric skin (304), wherein the facial features are formed using stiff fabrics; wherein the toy (100) is spherical in shape and has a diameter of 5-10 cm;
**characterized in that**
the plush fabric skin (304) tightly fits over the internal ball structure (302) and the plush fabric exterior (110) completely covers the interior ball structure (302) in a manner that does not significantly affect bounce as the plush fabric skin (304) has a size and shape that corresponds with the diameter of the internal ball (302) and a tightly sewn closing seam (306) to ensure a tight fit without any hinderances between an exterior surface of the internal ball structure (302) and the plush fabric exterior (110).

2. The toy (100) of claim 1, wherein the polyurethane comprises toluene diisocyantate, polyether polyol, tin octoate, silicone oil, and color cream.

3. The toy (100) of claim 1 wherein the plush fabric skin (304) comprises a pile to give the plush fabric the fur-like texture.

4. The toy (100) of claim 1, wherein the plush fabric skin (304) is designed to be spherical in shape and having a pocket for accepting the internal ball structure, wherein an open closing seam provides an opening into the pocket before the closing seam (306) is closed to cover the internal ball structure (302), and wherein the closing seam (306) has substantially the same length as the diameter of the internal ball structure (302).

5. A method of manufacture of a toy according to any previous claim, the method comprising:
forming an internal ball structure (302) comprising a highly resilient material capable of significant bouncing off a hard surface;
cutting a sewing pattern (400) to create a plurality of plush fabric portions;
sewing together the plurality of plush fabric portions according to the sewing pattern (400) to form a spherical plush fabric skin;
leaving open a closing seam on the plush fabric skin, wherein the closing seam (306) is substantially the same diameter as the diameter of an internal ball structure (302);
inserting the internal ball structure (302) into the plush fabric skin through the closing seam (306);
tightly sewing the seam closed to cover the internal ball structure (302) with the plush fabric skin (304), wherein the highly resilient material comprises polyurethane, stiff rubber or higly resilient polymers.

6. The method of claim 5 wherein the polyurethane comprises toluene diisocyantate, polyether polyol, tin octoate, silicone oil, and color cream.

7. The method of claim 5 wherein the plush fabric skin (304) comprises a pile to give the plush fabric a fur-like texture.

8. The method of claim 5 further comprising:
cutting extremity portions (410, 411, 412, 413, 414, 415, 416) in a soft and pliable fabric according to the sewing pattern (400); and sewing the extremity portions (410, 411, 412, 413, 414, 415, 416) to the plush fabric skin (304).

9. The method of claim 5 further comprising:
cutting facial features in a stiff fabric according to the sewing pattern (400); and
sewing the extremity portions over the plush fabric skin (304).

## Patentansprüche

1. Ein Spielzeug (100), umfassend:
eine innere Springballstruktur (302), umfassend ein hochelastisches Material, das in der Lage ist, deutlich von einer harten Oberfläche abzuprallen;
eine Plüschstoffhaut (304), die konfiguriert ist, um die innere Springballstruktur (302) zu bedecken, so dass die Plüschstoffhülle (110) die Fähigkeit der inneren Springballstruktur (302), beim Aufprall auf eine Oberfläche abzuprallen, nicht deutlich beeinträchtigt oder dämpft, wobei das Springballspielzeug (100) mit Plüschstoffhülle (110) 55-70 % einer gefallenen Höhe von einer harten Oberfläche abprallen kann;
wobei das hochelastische Material Polyurethan, steifen Gummi oder hochelastische Polymere umfasst;
wobei die Plüschstoffhaut einen Flor umfasst und die Florlänge 3-50 mm lang ist;
wobei die Plüschstoffhaut (304) ferner umfasst:
Extremitäten (120), umfassend einen weichen und nachgiebigen Stoff, der auf eine Plüschstoffhülle (110) der Plüschstoffhaut (304) genäht ist, und wobei die Extremitäten auf die Plüschstoffhülle genäht und nicht über Klebstoff oder einen anderen Kleber an dieser befestigt sind; und
Gesichtsmerkmale (130, 131, 132, 133, 134), die über die Plüschstoffhülle (110) der Plüschstoffhaut (304) genäht sind,
wobei die Gesichtsmerkmale unter Verwendung von steifen Stoffen gebildet sind;
wobei das Spielzeug (100) kugelförmig ist und einen Durchmesser von 5-10 cm hat;
**dadurch gekennzeichnet, dass** die Plüschstoffhaut (304) eng über die innere Springballstruktur (302) passt und die Plüschstoffhülle (110) die innere Springballstruktur (302) in einer Weise vollständig bedeckt, die Abprallen nicht deutlich beeinträchtigt, da die Plüschstoffhaut (304) eine Größe und Form, die dem Durchmesser der inneren Springballstruktur (302) entspricht, und eine fest vernähte Verschlussnaht (306) hat, um eine enge Passung ohne jegliche Hindernisse zwischen einer Außenfläche der inneren Springballstruktur (302) und der Plüschstoffhülle (110) sicherzustellen.

2. Das Spielzeug (100) nach Anspruch 1, wobei das Polyurethan Toluoldiisocyanat, Polyetherpolyol, Zinnoktoat, Silikonöl und Farbcreme umfasst.

3. Das Spielzeug (100) nach Anspruch 1, wobei die Plüschstoffhaut (304) einen Flor umfasst, um dem Plüschstoff die fellartige Struktur zu verleihen.

4. Das Spielzeug (100) nach Anspruch 1, wobei die Plüschstoffhaut (304) so gestaltet ist, dass sie kugelförmig ist und eine Tasche zum Aufnehmen der inneren Springballstruktur hat, wobei eine offene Verschlussnaht eine Öffnung in die Tasche bereitstellt, bevor die Verschlussnaht (306) geschlossen wird, um die innere Springballstruktur (302) zu bedecken, und wobei die Verschlussnaht (306) im Wesentlichen die gleiche Länge wie der Durchmesser der inneren Springballstruktur (302) hat.

5. Ein Verfahren zur Herstellung eines Spielzeugs nach einem der vorhergehenden Ansprüche, wobei das Verfahren umfasst:
Bilden einer inneren Springballstruktur (302), umfassend ein hochelastisches Material, das in der Lage ist, deutlich von einer harten Oberfläche abzuprallen;
Schneiden eines Schnittmusters (400), um eine Vielzahl von Plüschstoffhüllenabschnitten zu erzeugen;
Zusammennähen der Vielzahl von Plüschstoffhüllenabschnitten gemäß dem Schnittmuster (400), um eine kugelförmige Plüschstoffhaut zu bilden;
Offenlassen einer Verschlussnaht auf der Plüschstoffhaut, wobei die Verschlussnaht (306) im Wesentlichen den gleichen Durchmesser wie der Durchmesser einer inneren Springballstruktur (302) hat;
Einsetzen der inneren Springballstruktur (302) in die Plüschstoffhaut durch die Verschlussnaht (306);
festes Zusammennähen der Naht, um die innere Ballstruktur (302) mit der Plüschstoffhaut (304) zu bedecken, wobei das hochelastische Material Polyurethan, steifen Gummi oder hochelastische Polymere umfasst.

6. Das Verfahren nach Anspruch 5, wobei das Polyurethan Toluoldiisocyanat, Polyetherpolyol, Zinnoctoat, Silikonöl und Farbcreme umfasst.

7. Das Verfahren nach Anspruch 5, wobei die Plüschstoffhaut (304) einen Flor umfasst, um dem Plüschstoff eine fellartige Struktur zu verleihen.

8. Das Verfahren nach Anspruch 5, ferner umfassend:
Schneiden von Extremitätenabschnitten (410, 411, 412, 413, 414, 415, 416) in einen weichen und nachgiebigen Stoff gemäß dem Schnittmuster (400); und Nähen der Extremitätsabschnitte (410, 411, 412, 413, 414, 415, 416) an die Plüschstoffhaut (304).

9. Das Verfahren nach Anspruch 5, ferner umfassend:
Schneiden von Gesichtsmerkmalen in einen steifen Stoff gemäß dem Schnittmuster (400); und
Nähen der Extremitätenabschnitte über die Plüschstoffhaut (304).

## Revendications

1. Un jouet (100) comprenant :
une structure interne de balle (302) comprenant un matériau à forte souplesse capable de rebondir de façon significative sur une surface dure ;
une enveloppe en tissu pelucheux (304) configurée pour recouvrir la structure interne de balle (302) de telle manière que l'extérieur du tissu pelucheux (110) n'amortisse pas ou n'affecte pas de manière significative la capacité de la structure interne de balle (302) à rebondir lorsqu'elle frappe une surface, le jouet à balle rebondissante (100) avec l'extérieur en tissu pelucheux (110) pouvant rebondir sur une surface dure à 55 à 70 % d'une hauteur à laquelle il a été lâché ; le matériau à forte souplesse comprenant un polyuréthanne, un caoutchouc ferme ou des polymères à forte souplesse ;
dans lequel l'enveloppe en tissu pelucheux comprend du poil et la longueur du poil est de 3 à 50 mm en longueur ;
dans lequel l'enveloppe en tissu pelucheux (304) comprend en outre :
des extrémités (120) comprenant un tissu mou et pliable cousu sur un extérieur de tissu pelucheux (110) de l'enveloppe en tissu pelucheux (304), et les extrémités étant cousues dessus et n'étant pas fixées à l'extérieur en tissu pelucheux par l'intermédiaire d'une colle ou autre adhésif ; et
des détails de visage (130, 131, 132, 133, 134) cousus sur l'extérieur en tissu pelucheux (110) de l'enveloppe en tissu pelucheux (304), les détails de visage étant formés à l'aide de tissus raides ;
dans lequel le jouet (100) est de forme sphérique et présente un diamètre de 5 à 10 cm ;
**caractérisé par le fait que** l'enveloppe en tissu pelucheux (304) s'ajuste serrée par dessus la structure interne de balle et l'extérieur en tissu pelucheux (110) recouvre complètement la structure interne de balle (302) d'une manière qui n'affecte pas significativement le rebond du fait que l'enveloppe en tissu pelucheux (304) présente une dimension et une forme qui correspondent au diamètre de la balle interne (302) et qu'un raccord de fermeture cousu serré (306) assure un ajustement serré sans entraves entre une surface extérieure de la structure interne de balle (302) et l'extérieur en tissu pelucheux (110).

2. Le jouet (100) de la revendication 1, dans lequel le polyuréthanne comprend du diisocyanate de toluène, un polyol de polyéther, de l'octoate d'étain, de l'huile de silicone, et une crème colorante.

3. Le jouet (100) de la revendication 1, dans lequel l'enveloppe en tissu pelucheux (304) comprend du poil pour donner au tissu pelucheux une texture semblable à de la fourrure.

4. Le jouet (100) de la revendication 1, dans lequel l'enveloppe en tissu pelucheux (304) est conçue pour être de forme sphérique et possède une poche pour recevoir la structure interne de balle, dans lequel un raccord de fermeture ouvert assure une ouverture dans la poche avant que le raccord de fermeture (306) ne soit fermé pour recouvrir la structure interne de balle (302), et dans lequel le raccord de fermeture (306) a sensiblement la même longueur que le diamètre de la structure interne de balle (302).

5. Un procédé de fabrication d'un jouet selon l'une des revendications précédentes, le procédé comprenant :
la formation d'une structure interne de balle (302) comprenant un matériau à forte souplesse capable de rebondir de façon significative sur une surface dure ;
la découpe d'un patron de couture (400) pour créer une pluralité de pièces de tissu pelucheux ;
la couture ensemble de la pluralité de pièces de tissu pelucheux en fonction du patron de couture (400) pour former une enveloppe en tissu pelucheux sphérique ;
laisser ouvert un raccord de fermeture sur l'enveloppe en tissu pelucheux, le raccord de fermeture (306) ayant sensiblement le même diamètre que le diamètre d'une structure interne de balle (302) ;
l'insertion de la structure interne de balle (302) dans l'enveloppe en tissu pelucheux au travers du raccord de fermeture (306) ;
la couture serrée du raccord fermé pour recouvrir la structure interne de balle (302) avec l'enveloppe en tissu pelucheux (304), le matériau à forte souplesse comprenant un polyuréthanne, un caoutchouc ferme ou des polymères à forte souplesse.

6. Le procédé de la revendication 5, dans lequel le polyuréthanne comprend du diisocyanate de toluène, un polyol de polyéther, de l'octoate d'étain, de l'huile de silicone, et une crème colorante.

7. Le procédé de la revendication 5, dans lequel l'enveloppe en tissu pelucheux (304) comprend du poil pour donner au tissu pelucheux une texture semblable à de la fourrure.

8. Le procédé de la revendication 5 comprenant en outre :
la découpe des parties d'extrémité (410, 411, 412, 413, 414, 415, 416) dans un tissu mou et pliable conformément au patron de couture (400) ; et
la couture des parties d'extrémité (410, 411, 412, 413, 414, 415, 416) à l'enveloppe en tissu pelucheux (304).

9. Le procédé de la revendication 5 comprenant en outre :
la découpe de détails de visage dans un tissu raide conformément au patron de couture (400), et
la couture des parties d'extrémité par-dessus l'enveloppe en tissu pelucheux (304).
